# EUROPEAN PATENT SPECIFICATION

(11) **EP 4 097 965 B1**
(45) Date of publication and mention of the grant of the patent: **18.02.2026**
(21) Application number: 20821414.8
(22) Date of filing: 04.12.2020
(51) Int. Cl.: H04N 5/33, H04N 1/409, H04N 1/60, H04N 1/48

(54) **GAIN MODIFICATION DEVICE, SIGNAL PROCESSING UNIT, IMAGING DEVICE, IMAGE READING DEVICE, IMAGE FORMING APPARATUS, AND GAIN MODIFYING METHOD**
VERSTÄRKUNGSÄNDERUNGSVORRICHTUNG, SIGNALVERARBEITUNGSEINHEIT, BILDGEBUNGSVORRICHTUNG, BILDLESEVORRICHTUNG, BILDERZEUGUNGSVORRICHTUNG UND VERSTÄRKUNGSVERÄNDERUNGSVERFAHREN
DISPOSITIF DE MODIFICATION DE GAIN, UNITÉ DE TRAITEMENT DE SIGNAL, DISPOSITIF D'IMAGERIE, DISPOSITIF DE LECTURE D'IMAGE, APPAREIL DE FORMATION D'IMAGE, ET PROCÉDÉ DE MODIFICATION DE GAIN

(30) Priority: 29.01.2020 JP 2020012778; 18.09.2020 JP 2020157309
(43) Date of publication of application: 07.12.2022
(73) Proprietor: Ricoh Company, Ltd., Tokyo 143-8555 (JP)
(72) Inventor: SHIRADO, Hiroki, Tokyo 143-8555 (JP); NAKAZAWA, Masamoto, Tokyo 143-8555 (JP); SAKAGUCHI, Shinji, Tokyo 143-8555 (JP)
(74) Representative: SSM Sandmair
(86) International application number: PCT/IB2020/061471
(87) International publication number: WO 2021/152379

(56) References cited:
- EP-A2- 1 377 033
- US-A1- 2018 040 109

## Description

### [Technical Field]

Embodiments of the present disclosure generally relate to a gain modification device, a signal processing unit, an imaging device, an image reading device, an image forming apparatus, and a gain modifying method.

### [Background Art]

In image reading devices as known in the art, when a plurality of kinds of picture signals of red, green, and blue (RGB) that are obtained from a photoelectric conversion element are amplified by a variable gain amplifier (VGA), the gain value is modified in order to prevent saturation or the like on a color-by-color basis through a processing circuit with three channels, such that each one of the signal levels will be changed to a predetermined target value.

Currently, technologies are known in the art in which the gain values of picture signals output from a photoelectric conversion element through each one of the four channels that correspond to colors of red, green, and blue, and monochrome in black and white (BW), respectively, are modified by an analog front-end (AFE) controller (see, for example, PTL 1).

Moreover, currently, photoelectric conversion elements are known in the art that are provided with a group of pixels that receive infrared (IR) light as the fourth group of pixels and output invisible data in addition to visible data of red, green, and blue (RGB).

### [Citation List]

### [Patent Literature]

[PTL 1] Japanese Patent Application Publication No. 2004-040146

EP 1 377 033 A2 and US 2018/040109 A1 are further relevant prior art documents.

### [Summary of Invention]

### [Technical Problem]

However, in the gain modifying method known in the art, there is a problem that the variation between the ground (GND) and the power supply due to the load change in a processing circuit when the gain value is switched tends to cause changes in the level of picture signal at a different channel through the common impedance of the processing circuit.

In particular, the group of pixels that receive infrared (IR) light as described above has a low sensitivity on the infrared area of the silicon (Si), and thus the level of signal tends to be small, and the gain value tends to increase. For this reason, the influence on another channel due to the load change when the gain value is switched tends to increase.

Embodiments of the present disclosure are provided in view of such circumstances, and with one aspect of the present disclosure, the changes in the level of signal due to the load change when the gain value is switched can be reduced in a system with a plurality of lines of processing system.

### [Solution to Problem]

A gain modification device as defined in claim 1.

### [Advantageous Effects of Invention]

According to one aspect of the present disclosure, the changes in the level of signal due to the load change when the gain value is switched can be reduced in a system with a plurality of lines of processing system.

### [Brief Description of Drawings]

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.
[Fig. 1]

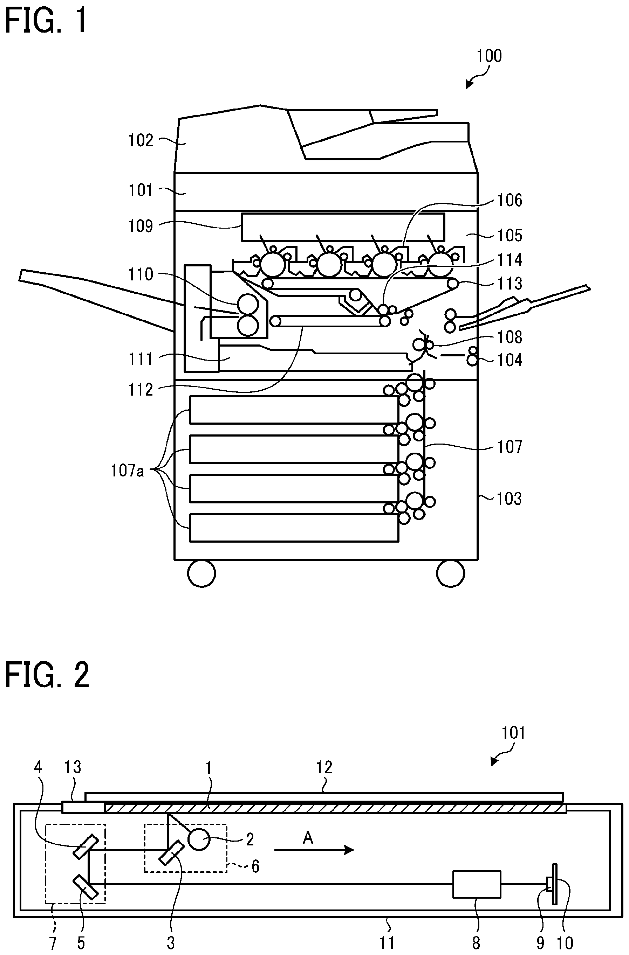

   FIG. 1 is a diagram illustrating a configuration or structure of an image forming apparatus according to embodiments of the present disclosure.
[Fig. 2]
   FIG. 2 is a sectional view of an example structure of an image reading unit, according to embodiments of the present disclosure.
[Fig. 3]

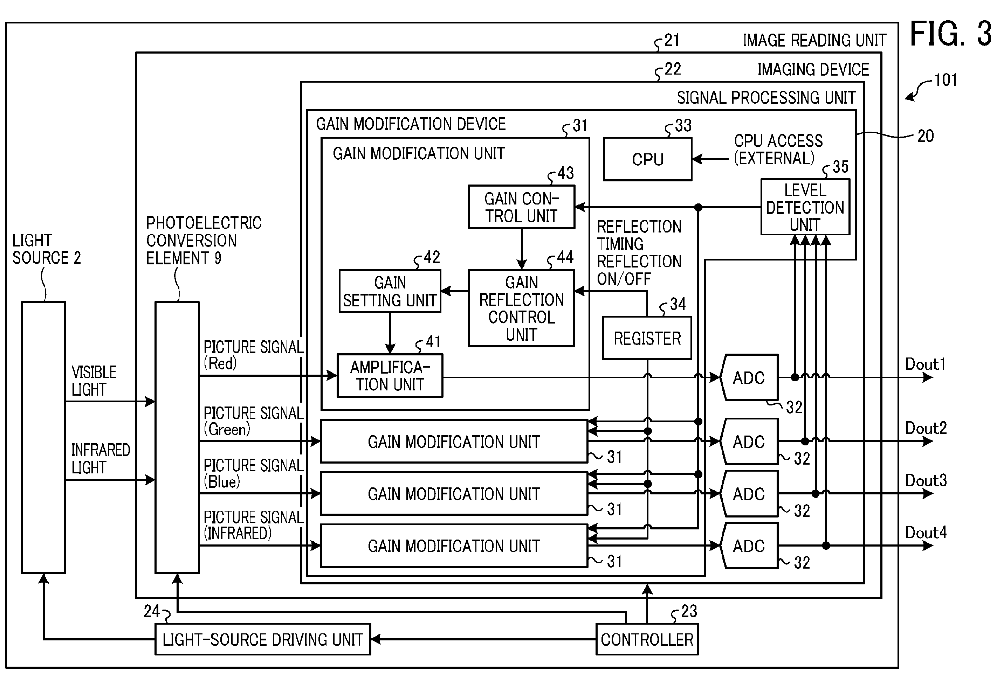

   FIG. 3 is a block diagram illustrating an electrical connection of the elements of an image reading unit according to embodiments of the present disclosure.
[Fig. 4]

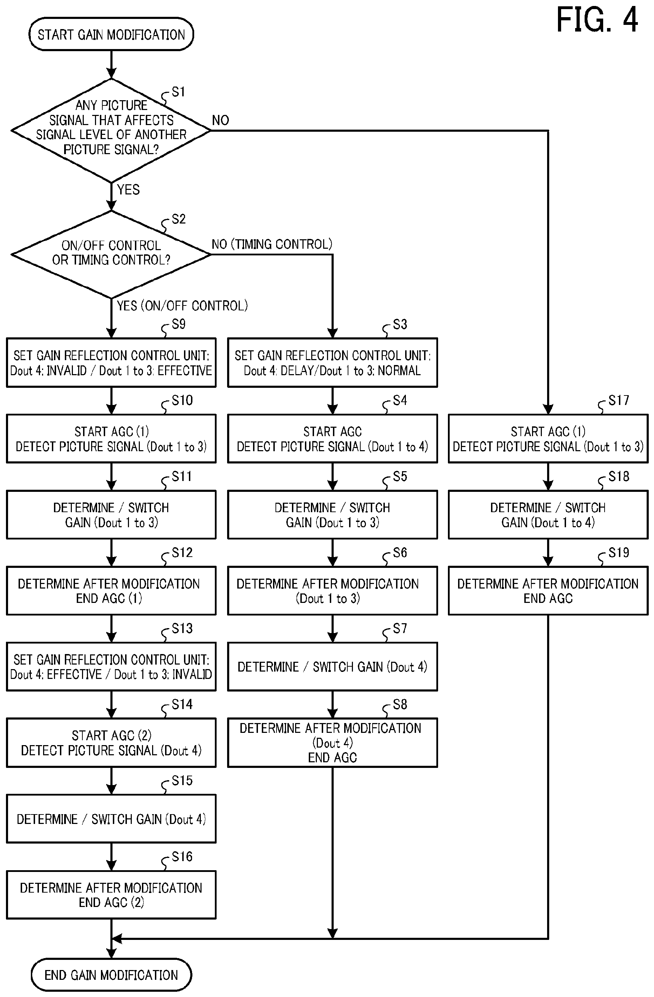

   FIG. 4 is a flowchart of gain modification processes according to embodiments of the present disclosure.
[Fig. 5]

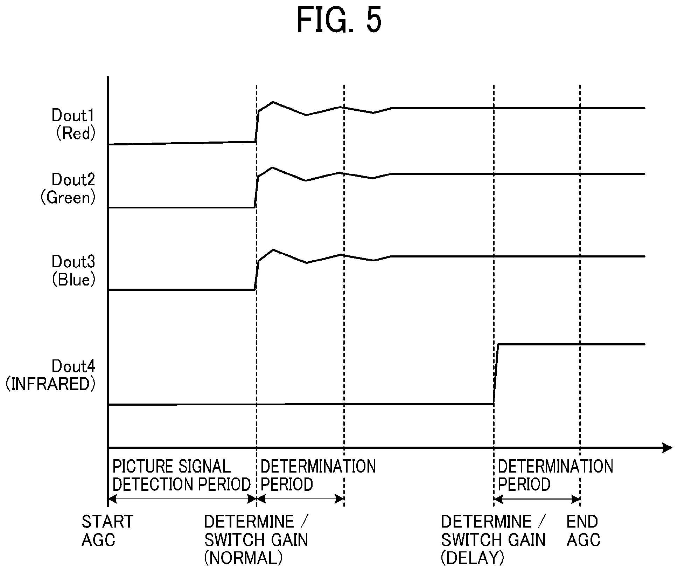

   FIG. 5 is a timing chart illustrating how automatic gain control (AGC) is performed in gain modification processes according to embodiments of the present disclosure.
[Fig. 6]

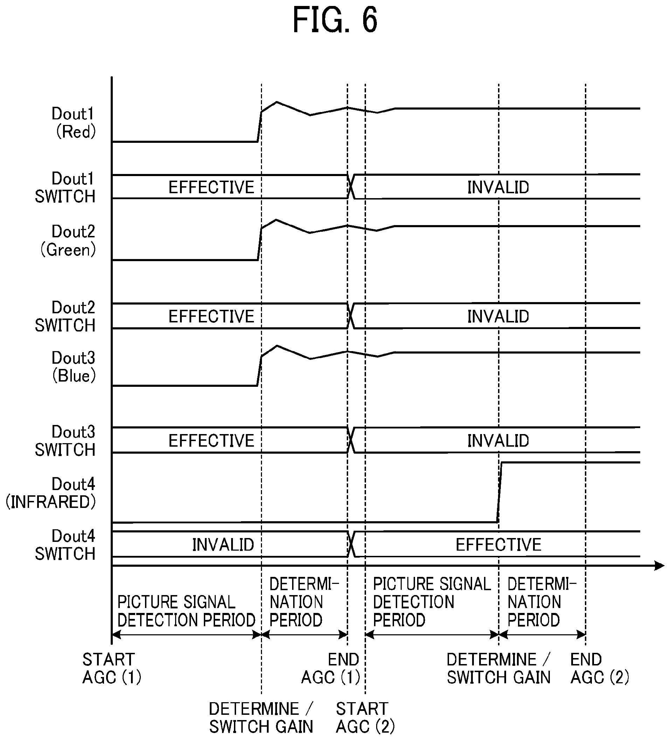

   FIG. 6 is a timing chart illustrating how automatic gain control (AGC) is performed in gain modification processes according to embodiments of the present disclosure.
[Fig. 7]

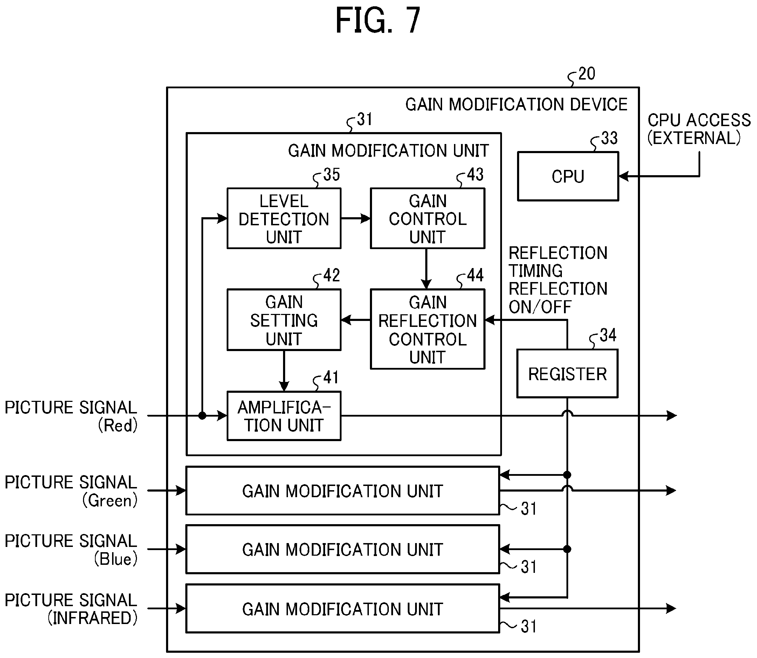

   FIG. 7 is a block diagram illustrating a modification of the configuration or structure of a gain modification device according to embodiments of the present disclosure.

### [Description of Embodiments]

Embodiments of the present disclosure of a gain modification device, a signal processing unit, an imaging device, an image reading device, an image forming apparatus, and a gain modifying method are described below in detail with reference to the accompanying drawings.

FIG. 1 is a diagram illustrating a configuration or structure of an image forming apparatus 100 according to embodiments of the present disclosure.

The image forming apparatus 100 as illustrated in FIG. 1 has at least two of a photocopying function, a printing function, a scanning function, and a facsimile (FAX) function, and is referred to as a multifunction printer or multifunction peripheral (MFP) in general.

The image forming apparatus 100 is provided with an image reading unit 101 and an automatic document feeder (ADF) 102 that together serve as an image reading device, and is further provided with an image forming unit 103 on the downside. In FIG. 1, an external cover of the image forming unit 103 is detached to illustrate the inner structure.

The ADF 102 is a document supporting unit that sets a document whose image thereon is to be scanned at a scanning position. The ADF 102 automatically conveys the document placed on the placing table to a scanning position. The image reading unit 101 scans and reads the document conveyed by the ADF 102 at a predetermined scanning position. Moreover, the image reading unit 101 has a contact glass on the top surface, and scans the document placed on the contact glass that is the scanning position. Note that the contact glass serves as a document supporting unit on which the document is to be placed. More specifically, the image reading unit 101 is an optical scanner internally provided with a photoelectric conversion element such as a light source, an optical system, and a charge coupled device (CCD), and uses an optical system to scan and read the light that is reflected from the document irradiated with the light emitted from the light source.

The image forming unit 103 prints a document image scanned and read by the image reading unit 101. The image forming unit 103 is provided with a manual feeding roller 104 through which a sheet of recording paper is manually fed and a recording paper supply unit 107 that supplies a recording paper. The recording paper supply unit 107 has mechanisms to feed a recording paper from a plurality of sheet trays 107a at multiple levels. The fed recording paper is conveyed to a secondary transfer belt 112 through a registration roller pair 108.

A toner image on the intermediate transfer belt 113 is transferred by a transfer unit 114 onto a recording paper that is conveyed on the secondary transfer belt 112.

Moreover, the image forming unit 103 includes, for example, an optical writing device 109, an image forming unit (Y, M, C, and K) 105 of tandem system, the intermediate transfer belt 113, and the secondary transfer belt 112 as described above. In the image forming processes performed by the image forming unit 105, an image that is drawn by the optical writing device 109 is formed on the intermediate transfer belt 113 as a toner image.

More specifically, the image forming unit (Y, M, C, and K) 105 includes four photoconductor drums (Y, M, C, and K) in a rotatable manner, and an image forming element 106 that includes a charging roller, a development device, a primary transfer roller, a cleaner unit, and a discharger is disposed around each one of the four photoconductor drums. The image forming element 106 functions on each one of the four photoconductor drums, and an image that is formed on each one of the four photoconductor drums is transferred onto the intermediate transfer belt 113 by corresponding one of the primary transfer rollers.

The intermediate transfer belt 113 is arranged as extended by a drive roller and at least one driven roller at the nip between the multiple photoconductor drums and the multiple primary transfer rollers. As intermediate transfer belt 113 runs, the secondary transfer device secondarily transfers the toner image, which is transferred onto the intermediate transfer belt 113 in the primary transfer process, onto the recording paper that is being conveyed on the secondary transfer belt 112. As the secondary transfer belt 112 runs, the recording paper is conveyed to the fixing device 110, and the toner image is fixed on the recording paper as a color image. After that, the recording paper is ejected to an external output tray. When duplex printing is to be performed, the front and back sides of the recording paper is turned by a turning mechanism 111, and the turned recording paper is conveyed onto the secondary transfer belt 112.

The image forming unit 103 is not limited to a unit as described above that adopts the electrophotography to form an image, but may be a unit that adopts the inkjet printing system to form an image.

The image reading unit 101 is described below.

FIG. 2 is a sectional view of an example structure of the image reading unit 101 according to the present embodiment.

As illustrated in FIG. 2, the image reading unit 101 has a main body 11, and includes a sensor board 10 provided with a photoelectric conversion element 9, a lens unit 8, a first carriage 6, and a second carriage 7 inside the main body 11. The photoelectric conversion element 9 is, for example, a charge coupled device (CCD) image sensor or a complementary metal oxide semiconductor (CMOS) image sensor. The first carriage 6 includes a mirror 3 and a lightemitting diode (LED) that serves as a light source 2. The second carriage 7 includes a pair of mirrors 4 and 5. The image reading unit 101 is provided with a contact glass 1 and a reference white board 13 on the top surface.

In the reading or scanning operation, the image reading unit 101 uses the light source 2 to emit the light toward the upper side while moving the first carriage 6 and the second carriage 7 from a standby position or home position in an A-direction that is the sub-scanning direction. Then, the first carriage 6 and the second carriage 7 forms an image of the light reflected by a document 12, on the photoelectric conversion element 9 through the lens unit 8.

For example, when the power is turned on, the image reading unit 101 reads or scans the light reflected by the reference white board 13, and sets the base line. In other words, upon moving the first carriage 6 to a position directly below the reference white board 13, the image reading unit 101 turns on the light source 2, and forms an image of the light reflected by the reference white board 13 on the photoelectric conversion element 9 to modify the gain.

FIG. 3 is a block diagram illustrating an electrical connection of the elements of the image reading unit 101 according to the present embodiment.

As illustrated in FIG. 3, the image reading unit 101 is provided with the light source 2, an imaging device 21, a controller 23, and a light-source driving unit 24. The light-source driving unit 24 drives the light source 2.

The light source 2 irradiates a document, which serves as an object, with visible light of visible wavelengths of red, green, and blue and invisible light of infrared (IR) wavelengths, which is an infrared light.

The imaging device 21 is provided with a photoelectric conversion element 9 and a signal processing unit 22.

The photoelectric conversion element 9 receives the incident light that is decomposed by, for example, a color filter into visible light of visible wavelengths of red, green, and blue and invisible light of infrared (IR) wavelengths, which is an infrared light, on a wavelength-by-wavelength basis, and converts the received light into an electrical signal of red, green, blue, or infrared light. When a visible image is scanned and read, the photoelectric conversion element 9 simultaneously outputs a picture signal of red, green, or blue (RGB) to the signal processing unit 22 at a subsequent stage through a plurality of separate lines. When an invisible image is scanned and read, the photoelectric conversion element 9 simultaneously outputs a picture signal of infrared (IR) to the signal processing unit 22 at a subsequent stage through a separate line.

In the present embodiment, an infrared (IR) image is used as an invisible image. However, no limitation is indicated thereby, and an ultraviolet image may be used as an invisible image. Moreover, the wavelength band that is adopted for the invisible image is not limited. In an alternative embodiment, only visible images may be used.

The controller 23 controls each one of the light-source driving unit 24, the photoelectric conversion element 9, and the signal processing unit 22.

The signal processing unit 22 performs various kinds of signal processing on the picture signal output from the photoelectric conversion element 9.

The signal processing unit 22 is described below in detail.

As illustrated in FIG. 3, the signal processing unit 22 is provided with a plurality of gain modification units 31 and analog-to-digital (A/D) converters 32, and the number of gain modification units 31 and A/D converters 32 corresponds to the number of multiple channels or the number of kinds of signals. Due to such a configuration, gain control processes can be performed on a plurality of kinds of picture signals in an independent manner. The signal processing unit 22 is provided with a central processing unit (CPU) 33, a register 34, and a level detection unit 35. The level detection unit 35 and the multiple gain modification units 31 whose number of units corresponds to the number of multiple channels or the number of kinds of signals are controlled by the CPU 33 to execute a series of gain control processes. In the present embodiment, the gain modification device 20 is implemented by the CPU 33, the register 34, the level detection unit 35, and the multiple gain modification units 31 whose number of units corresponds to the number of multiple channels or the number of kinds of signals.

The level detection unit 35 detects the level of the digital data of the signals output from the multiple A/D converters 32.

Each one of the gain modification units 31 includes an amplification unit 41, a gain setting unit 42, a gain control unit 43, and a gain reflection control unit 44.

The gain setting unit 42 stores a gain value.

The amplification unit 41 amplifies an input signal by the gain value stored in the gain setting unit 42, and outputs the amplified input signal as an output signal. The amplification unit 41 may be, for example, a switched capacitor. However, no limitation is intended thereby, and the amplification unit 41 may be any other unit or device as long as it can amplify a signal.

The gain control unit 43 determines the gain value based on the level of the signals that are output from the multiple A/D converters 32 and detected by the level detection unit 35.

In other words, the level detection unit 35 and the multiple gain control units 43 configures and implements an automatic gain control (AGC) function in which an optimized gain setting for the state of each input signal is achieved where appropriate.

More specifically, the level detection unit 35 detects the level of each input signal that is notyet amplified by the multiple amplification units 41. Each one of the multiple gain control units 43 determines the gain value based on the level detected by the level detection unit 35. Each one of the multiple gain setting units 42 switches the gain value of the corresponding one of the multiple amplification units 41.

Each one of the multiple gain control units 43 includes an arithmetic circuit that computes and obtains a target gain value based on the detected level.

The level detection unit 35 and the multiple gain modification units 31 whose number of units corresponds to the number of multiple channels or the number of kinds of signals are controlled by the CPU 33 as illustrated in FIG. 3 to execute a series of gain control processes.

When gain modification processes are simultaneously performed by each one of the gain modification units 31, the inputs to the neighboring pair of gain modification units 31 may vary through a common impedance due to the load change caused by a signal with a determined gain that is relatively large.

In the present embodiment, the size of picture signal may vary between visible light and infrared light, and there are some cases in which the picture signals of infrared light have lower values. In actuality, the amount of picture signals of infrared light is as small as an integral submultiple of the amount of picture signals of visible light. This is because the quantum sensitivity in an invisible or infrared area is lower than that of the visible area on a silicon (Si) that configures the photoelectric conversion element 9.

In order to handle such a situation, each one of the gain modification units 31 according to the present embodiment includes the gain reflection control unit 44. The gain reflection control unit 44 changes the timing at which the gain value is to be switched, which is determined by an automatic gain control (AGC) function and sent from the multiple gain control unit 43. By so doing, the gain value of a picture signal that affects the signal level of other picture signals is switched at a timing different from that of the other picture signals. More specifically, the gain reflection control unit 44 delays the timing at which the gain value of a specific picture signal is to be reflected compared with the timing at which the gain values of the other picture signals are to be reflected. Alternatively, the gain reflection control unit 44 determines whether or not the gain value sent from the gain control unit 43 is to be switched. In other words, the gain reflection control unit 44 determines whether or not to reflect the gain value sent from the gain control unit 43 in the gain setting unit 42. Due to this configuration, in each one of the gain modification units 31, the determined gain values are not reflected in the gain setting unit 42 at the same time, and no load change occurs due to the switches in gain value.

In other words, depending on the presence or absence of a channel where the gain value is not to be switched at the same time, the gain reflection control unit 44 delays the timing of reflection by a predetermined length of time in regard to a picture signal that could affect the signal level of other picture signals, such that the gain value is changed and updated at a timing different from that of the other picture signals. Depending on circumstances, the timing of reflection to be controlled by the gain reflection control unit 44 is stored in the register 34 through the CPU 33.

Alternatively, the gain reflection control unit 44 is switched on and off depending on the presence or absence of a channel where the gain value is not to be switched at the same time. Depending on circumstances, the on/off control is to be performed by the gain reflection control unit 44 is stored in the register 34 through the CPU 33.

The flow of gain modification processes that are performed by the signal processing unit 22 is described below.

FIG. 4 is a flowchart of gain modification processes according to the present embodiment.

FIG. 5 and FIG. 6 are timing charts each illustrating how automatic gain control (AGC) is performed in the gain modification processes according to the present embodiment.

In the present embodiment as illustrated in FIG. 5 and FIG. 6, the changes in level while the automatic gain control (AGC) is being performed on Dout 1 to 4 output from each one of the four gain modification units 31 are plotted.

As illustrated in FIG. 4, firstly, in a step S1, the signal processing unit 22 determines whether there is any picture signal that could affect the signal level of another picture signal. When it is determined that there is at least one picture signal that could affect the signal level of another picture signal ("YES" in the step S1), as described above, in a step S2, branching is executed as the gain reflection control unit 44 of the signal processing unit 22 determines whether ON/OFF control is to be performed for switching or reflection timing is to be shifted and made different from each other. For example, the gain reflection control unit 44 may refer to predetermined modes (e.g., a mode in which ON/OFF control is to be performed for switching and a mode in which reflection timing is to be shifted and made different from each other) to determine whether ON/OFF control is to be performed for switching or reflection timing is to be shifted and made different from each other.

When timing control is to be performed by the gain reflection control unit 44 ("NO" in the step S2), the light source 2 of the image reading unit 101 emits both visible light and infrared light, and the signal processing unit 22 modifies the gain values of visible and invisible (red, green, blue, and infrared) areas. In so doing, in a step S3, the gain reflection control units 44 of the signal processing unit 22 configure the gain switching of Dout 4 (infrared light) to be "delayed" and configures the gain switching of Dout 1 to 3 (visible lights) to be "normal" in advance through the register 34.

As illustrated in FIG. 4, in a step S4, once the automatic gain control (AGC) starts, the signal processing unit 22 detects a picture signal with an initial gain value. Then, in a step S5, the multiple gain modification units 31 of the signal processing unit 22 determine the gain values (Dout 1 to 3) and switch the gain values (Dout 1 to 3) such that the gain values will be changed to a predetermined target value.

As the gain switching of Dout 4 (infrared light) is configured to be "delayed" by the gain reflection control unit 44, as illustrated in FIG. 5, the signal processing unit 22 does not reflect the gain values sent from the corresponding gain control unit 43 in the gain modification unit 31 that corresponds to Dout 4 at this timing.

On the other hand, as the gain switching of Dout 1 to 3 (visible lights) is configured to be "normal" by the gain reflection control unit 44, as illustrated in FIG. 5, the signal processing unit 22 reflects the gain values sent from the gain control units 43 in the gain modification units 31 that correspond to Dout 1 to 3.

As a result, in a step S6, the signal processing unit 22 determines that only the gain values of visible area channels of red, green, and blue (RGB) have been modified.

Then, Dout 4 is configured to be "normal" by the gain reflection control unit 44, and the signal processing unit 22 reflects the gain value sent from the corresponding gain control unit 43 in the gain modification unit 31 that corresponds to Dout 4 with a time lag.

In other words, in a step S7, the corresponding one of the multiple gain modification units 31 of the signal processing unit 22 determines the gain value (Dout 4) and switches the gain value (Dout 4) such that the gain values will be changed to a predetermined target value.

The degree of delay when the gain switching is configured to be "delayed" by the gain reflection control unit 44 is configured to be variable by the register 34 depending on the length of time during which the load change occurs.

As a result, the signal processing unit 22 determines that only the gain value of invisible area channel of infrared has been modified. As reflection timing is shifted and made different from each other between an invisible area of infrared and visible areas of red, green, and blue (RGB) colors, in a step S8, the signal processing unit 22 then terminates the automatic gain control (AGC) without being influenced by the noise from Dout 4.

Due to such a configuration, accurate automatic gain control (AGC) is enabled without being influenced by the noise of a channel with a large gain value.

As described above, according to the present embodiment, the timing at which the gain value of a plurality of signal levels whose gain value is relatively large is switched is delayed. Due to such a configuration, the influence of noise on another signal when the gain value is switched can virtually be eliminated, and the changes in the level of signal due to the load change when the gain value is switched can be reduced in a system with a plurality of lines of processing system.

Moreover, according to the present embodiment, a long-time waiting equal to or longer than the length of time during which the automatic gain control (AGC) is performed in view of the variations in the length of convergence time for the load change when a load change occurs does not need to be taken into consideration.

When ON/OFF control is to be performed by the gain reflection control unit 44 ("YES" in the step S2), the signal processing unit 22 instructs the light source 2 of the image reading unit 101 to emit both visible light and infrared light as the first automatic gain control AGC (1), and modify the gain values of visible areas of red, green, and blue (RGB) colors. In so doing, in a step S9, the signal processing unit 22 configures the gain switching of Dout 4 (infrared light) to be "invalid" and configures the gain switching of Dout 1 to 3 (visible lights) to be "effective" in advance.

As illustrated in FIG. 4, in a step S10, once the first automatic gain control AGC (1) starts, the signal processing unit 22 detects a picture signal with an initial gain value. Then, in a step S11, the multiple gain modification units 31 of the signal processing unit 22 determine the gain values such that the gain values will be changed to a predetermined target value, and switches the gain values all at once.

As illustrated in FIG. 6, as the gain switching of Dout 4 (infrared light) is configured to be "invalid" by the gain reflection control unit 44 and the switching is turned off, the signal processing unit 22 does not reflect the gain value sent from the corresponding gain control unit 43 in the gain modification unit 31 that correspond to Dout 4.

On the other hand, as illustrated in FIG. 6, as the gain switching of Dout 1 to 3 (visible lights) is configured to be "effective" by the gain reflection control unit 44 and the switching is turned on, the signal processing unit 22 reflects the gain values sent from the gain control units 43 in the gain modification units 31 that correspond to Dout 1 to 3.

As a result, in a step S12, the signal processing unit 22 determines that only the gain values of visible area channels of red, green, and blue (RGB) have been modified, and then terminates the first automatic gain control AGC (1) without being influenced by the noise from Dout 4.

Subsequently, in a step S13, the signal processing unit 22 configures the gain switching of Dout 1 to 3 (visible lights of red, green, and blue (RGB)) to be "invalid" and configures the gain switching of Dout 4 (infrared light) to be "effective," and starts the processes of the second automatic gain control AGC (2).

As illustrated in FIG. 4, in a step S14, once the second automatic gain control AGC (2) starts, the signal processing unit 22 detects a picture signal with an initial gain value. Then, in a step S15, the multiple gain modification units 31 of the signal processing unit 22 determine the gain values such that the gain values will be changed to a predetermined target value, and switches the gain values all at once.

As illustrated in FIG. 6, as the gain switching of Dout 1 to 3 (visible lights) is configured to be "invalid" by the gain reflection control unit 44 and the switching is turned off, the signal processing unit 22 does not reflect the gain value sent from the corresponding ones of gain control units 43 in the gain modification units 31 that correspond to Dout 1 to 3.

On the other hand, as illustrated in FIG. 6, as the gain switching of Dout 4 (infrared light) is configured to be "effective" by the gain reflection control unit 44 and the switching is turned on, the signal processing unit 22 reflects the gain value sent from the corresponding gain control unit 43 in the gain modification unit 31 that correspond to Dout 4.

As a result, in a step S16, the signal processing unit 22 determines that only the gain value of invisible area channel of infrared has been modified, and then terminates the second automatic gain control AGC (2) without being influenced by the noise from Dout 1 to 3.

Due to such a configuration, accurate automatic gain control (AGC) is enabled without being influenced by the noise of a channel with a large gain value.

As described above, according to the present embodiment, the timing at which the gain value of a plurality of signal levels whose gain value is relatively large is switched is deactivated. Due to such a configuration, the influence of noise on another signal when the gain value is switched can virtually be eliminated, and the changes in the level of signal due to the load change when the gain value is switched can be reduced in a system with a plurality of lines of processing system.

Moreover, according to the present embodiment, the automatic gain control (AGC) is performed twice. However, a long-time waiting equal to or longer than the length of time during which the automatic gain control (AGC) is performed in view of the variations in the length of convergence time for the load change when a load change occurs does not need to be taken into consideration. For example, when another kind of control is to be performed on a scanner or the like, the timing at which the second automatic gain control (AGC) is to be performed may be determined in view of the sequence and the system configuration around the imaging device.

For example, when the radiation intensity of incident light is sufficiently high and the gain value is not too high in the optical system being handled and it is determined that the influence of noise among a plurality of channels is not significantly large, the signal processing unit 22 may determine that the gain switching is "effective" through all the channels, and the automatic gain control (AGC) may be performed all at once.

In such a configuration, it is determined as illustrated in FIG. 4 that there is no picture signal that affects the signal level of other picture signals in the first place ("NO" in the step S1), in a similar manner to the embodiment as described above, in a step S17, once the first automatic gain control AGC starts, the signal processing unit 22 detects a picture signal with an initial gain value. Then, in a step S18, the multiple gain modification units 31 of the signal processing unit 22 determine the gain values (Dout 1 to 4) such that the gain values will be changed to a predetermined target value, and switch the gain values all at once. After it is determined that the gain values of all the channels have been modified, in a step S19, the automatic gain control (AGC) is terminated.

FIG. 7 is a block diagram illustrating a modification of the configuration or structure of the gain modification device 20 according to the present embodiment. As illustrated in FIG. 7, the gain modification device 20 may include the level detection unit 35 within each one of the gain modification units 31. In this configuration, the level detection unit 35 detects the level of a picture signal that has not yet amplified by the multiple amplification units 41.

In the embodiment as described above, the image forming apparatus according to an embodiment of the present disclosure is applied to a multifunction printer or multifunction peripheral (MFP) that has at least two of a photocopying function, a printing function, a scanning function, and a facsimile (FAX) function. However, no limitation is indicated thereby, and the image forming apparatus according to an embodiment of the present disclosure may be applied to any image forming apparatus such as a copier, a printer, a scanner, and a facsimile (FAX).

The invention is not limited to the disclosed exemplary embodiments, but by the scope of the following claims.

Any one of the above-described operations may be performed in various other ways, for example, in an order different from the one described above. Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA), and conventional circuit components arranged to perform the recited functions.

This patent application is based on and claims priority to Japanese Patent Application Nos. 2020-012778, filed on January 29, 2020, and 2020-157309, filed on September 18, 2020, in the Japan Patent Office.

### [Reference Signs List]

2 Light source
9 Photoelectric conversion element
20 Gain modification device
21 Imaging device
22 Signal processing unit
31 Gain modification unit
32 A/D converter
44 Gain reflection control unit
100 Image forming apparatus
101 Image reading unit
103 Image forming unit

## Claims

1. A gain modification device (20) comprising:
a plurality of gain modification units (31) whose number of units corresponds to a number of kinds of a plurality of signals input to the plurality of gain modification units, each one of the plurality of gain modification units (31) being configured to modify a gain value used to amplify the plurality of signals; wherein
each one of the plurality of gain modification units (31) comprises a gain reflection control unit (44) configured to change a timing at which the gain value is to be switched by the corresponding gain modification unit (31) such that the gain value of one of the plurality of signals affecting a signal level of another one of the plurality of signals is switched at a timing different from a timing at which the gain value of the another one of the plurality of signals is switched,
wherein each gain reflection control unit (44) is further configured to set a variable degree of delay for the gain switching depending on the length of time during which a load change occurs when the gain value is switched.

2. The gain modification device (20) according to claim 1,
wherein the plurality of gain reflection control units (44) determines that the gain value of the one of the plurality of signals affecting the signal level of the another one of the plurality of signals is not to be switched by the plurality of gain modification units (31).

3. The gain modification device (20) according to claim 1,
wherein the plurality of gain reflection control units (44) delays the timing at which the gain value of the one of the plurality of signals affecting the signal level of the another one of the plurality of signals is to be switched by the plurality of gain modification units (31)

4. A signal processing unit (22) comprising
the gain modification device (20) according to any one of claims 1 to 3,
wherein each one of the plurality of signals is a picture signal that is input for each one of a plurality of processing systems.

5. An imaging device (21) comprising:
a photoelectric conversion element (9) configured to convert an incident light into a signal and output the signal; and
the signal processing unit (22) according to claim 4,
wherein the signal output from the photoelectric conversion element (9) is a picture signal of each color.

6. The imaging device (21) according to claim 5,
wherein the picture signal of each color includes a picture signal output upon receiving a visible light and a picture signal output upon receiving an invisible light.

7. An image reading device (101) comprising:
a light source (2) configured to emit light; and
the imaging device (21) according to claim 5 or 6.

8. An image forming apparatus (100) comprising:
an image forming unit (103); and
the image reading device (101) according to claim 7.

9. A method of modifying a gain, the method comprising:
modifying a gain value used to amplify a plurality of signals; wherein
changing a timing at which the gain value is to be switched in the modifying the gain value used to amplify the plurality of signals such that the gain value of one of the plurality of signals affecting a signal level of another one of the plurality of signals is switched at a timing different from a timing at which the gain value of the another one of the plurality of signals is switched,
wherein a degree of delay for the gain switching is variable depending on the length of time during which a load change occurs when the gain value is switched.

## Patentansprüche

1. Eine Verstärkungsmodifikationsvorrichtung (20), die Folgendes umfasst:
mehrere Verstärkungsmodifikationseinheiten (31), deren Anzahl der Anzahl von Arten mehrerer Signale entspricht, die in die mehrere Verstärkungsmodifikationseinheiten eingegeben werden, wobei jede der mehrere Verstärkungsmodifikationseinheiten (31) dazu eingerichtet ist, einen Verstärkungswert zu modifizieren, der zum Verstärken mehreren Signale verwendet wird; wobei
jede der mehrere Verstärkungsmodifikationseinheiten (31) eine Verstärkungsreflexionssteuereinheit (44) umfasst, die dazu eingerichtet ist, einen Zeitpunkt zu ändern, zu dem der Verstärkungswert durch die entsprechende Verstärkungsmodifikationseinheit (31) umgeschaltet wird, so dass der Verstärkungswert eines der mehreren Signale, der einen Signalpegel eines anderen der mehreren Signale beeinflusst, zu einem Zeitpunkt umgeschaltet wird, der sich von einem Zeitpunkt unterscheidet, zu dem der Verstärkungswert des anderen der mehreren Signale umgeschaltet wird,
wobei jede Verstärkungsreflexionssteuereinheit (44) ferner dazu eingerichtet ist, einen variablen Verzögerungsgrad für die Verstärkungsumschaltung in Abhängigkeit von der Dauer einzustellen, während der eine Laständerung auftritt, wenn der Verstärkungswert umgeschaltet wird.

2. Die Verstärkungsmodifikationsvorrichtung (20) gemäß Anspruch 1,
wobei die mehreren Verstärkungsreflexionssteuereinheiten (44) bestimmen, dass der Verstärkungswert des einen der mehreren Signale, das den Signalpegel des anderen der mehreren Signale beeinflusst, nicht durch die mehreren Verstärkungsmodifikationseinheiten (31) umgeschaltet werden soll.

3. Die Verstärkungsmodifikationsvorrichtung (20) gemäß Anspruch 1,
wobei die mehreren Verstärkungsreflexionssteuereinheiten (44) den Zeitpunkt verzögern, zu dem der Verstärkungswert des einen der mehreren Signale, das den Signalpegel des anderen der mehreren Signale beeinflusst, durch die mehreren Verstärkungsmodifikationseinheiten (31) umgeschaltet werden soll.

4. Eine Signalverarbeitungseinheit (22), umfassend
die Verstärkungsmodifikationsvorrichtung (20) gemäß einem der Ansprüche 1 bis 3,
wobei jedes der mehreren Signale ein Bildsignal ist, das in jedes von mehreren Verarbeitungssystemen eingegeben wird.

5. Eine Bildgebungsvorrichtung (21), die umfasst:
ein photoelektrisches Wandlerelement (9), das dazu eingerichtet ist, einfallendes Licht in ein Signal umzuwandeln und das Signal auszugeben; und
die Signalverarbeitungseinheit (22) gemäß Anspruch 4,
wobei das vom photoelektrischen Wandlerelement (9) ausgegebene Signal ein Bildsignal jeder Farbe ist.

6. Die Bildgebungsvorrichtung (21) gemäß Anspruch 5,
wobei das Bildsignal jeder Farbe ein Bildsignal umfasst, das beim Empfang von sichtbarem Licht ausgegeben wird, und ein Bildsignal, das beim Empfang von unsichtbarem Licht ausgegeben wird.

7. Eine Bildlesevorrichtung (101), die Folgendes umfasst:
eine Lichtquelle (2), die dazu eingerichtet ist, Licht zu emittieren; und
die Bildgebungsvorrichtung (21) gemäß Anspruch 5 oder 6.

8. Eine Bilderzeugungsvorrichtung (100), umfassend:
eine Bilderzeugungseinheit (103); und
die Bildlesevorrichtung (101) gemäß Anspruch 7.

9. Ein Verfahren zum Modifizieren einer Verstärkung, wobei das Verfahren umfasst:
das Modifizieren eines Verstärkungswerts, der zum Verstärken mehrerer Signale verwendet wird; wobei
das Ändern eines Zeitpunkts, zu dem der Verstärkungswert beim Modifizieren des Verstärkungswerts, der zum Verstärken mehrerer Signale verwendet wird, umgeschaltet werden soll, so dass der Verstärkungswert eines der mehreren Signale, der einen Signalpegel eines anderen der mehreren Signale beeinflusst, zu einem Zeitpunkt umgeschaltet wird, der sich von einem Zeitpunkt unterscheidet, zu dem der Verstärkungswert des anderen der mehreren Signale umgeschaltet wird,
wobei ein Grad der Verzögerung für die Verstärkungsumschaltung in Abhängigkeit von der Zeitdauer variabel ist, während der eine Laständerung auftritt, wenn der Verstärkungswert umgeschaltet wird.

## Revendications

1. Dispositif de modification de gain (20) comprenant :
une pluralité d'unités de modification de gain (31) dont le nombre d'unités correspond au nombre de types d'une pluralité de signaux transmis à la pluralité d'unités de modification de gain, chaque unité de la pluralité d'unités de modification de gain (31) étant conçue pour modifier une valeur de gain servant à amplifier la pluralité de signaux,
chaque unité de la pluralité d'unités de modification de gain (31) comprenant une unité de commande de réflexion de gain (44) conçue pour changer le moment auquel la valeur de gain doit basculer sous l'effet de l'unité de modification de gain (31) correspondante de façon que la valeur de gain d'un signal de la pluralité de signaux affectant un niveau de signal d'un autre signal de la pluralité de signaux bascule à un moment différent du moment auquel la valeur de gain dudit autre signal de la pluralité de signaux bascule,
chaque unité de commande de réflexion de gain (44) étant en outre conçue pour définir un degré de retard variable pour le basculement de gain en fonction de la durée pendant laquelle un changement de charge se produit lorsque la valeur de gain bascule.

2. Dispositif de modification de gain (20) selon la revendication 1,
dans lequel la pluralité d'unités de commande de réflexion de gain (44) détermine que la valeur de gain dudit signal de la pluralité de signaux affectant le niveau de signal dudit autre signal de la pluralité de signaux ne doit pas basculer sous l'effet de la pluralité d'unités de modification de gain (31).

3. Dispositif de modification de gain (20) selon la revendication 1,
dans lequel la pluralité d'unités de commande de réflexion de gain (44) retarde le moment auquel la valeur de gain dudit signal de la pluralité de signaux affectant le niveau de signal dudit autre signal de la pluralité de signaux doit basculer sous l'effet de la pluralité d'unités de modification de gain (31).

4. Unité de traitement de signal (22) comprenant :
le dispositif de modification de gain (20) selon l'une quelconque des revendications 1 à 3 ;
chaque signal de la pluralité de signaux étant un signal d'image qui est transmis pour chaque système d'une pluralité de systèmes de traitement.

5. Dispositif d'imagerie (21) comprenant :
un élément de conversion photoélectrique (9) conçu pour convertir une lumière incidente en un signal et pour émettre le signal, et
l'unité de traitement de signal (22) selon la revendication 4 ;
le signal émis par l'élément de conversion photoélectrique (9) étant un signal d'image de chaque couleur.

6. Dispositif d'imagerie (21) selon la revendication 5,
dans lequel le signal d'image de chaque couleur comprend un signal d'image émis lors de la réception d'une lumière visible et un signal d'image émis lors de la réception d'une lumière invisible.

7. Dispositif de lecture d'images (101) comprenant :
une source de lumière (2) conçue pour émettre une lumière, et
le dispositif d'imagerie (21) selon la revendication 5 ou 6.

8. Appareil de formation d'images (100) comprenant :
une unité de formation d'images (103), et
le dispositif de lecture d'images (101) selon revendication 7.

9. Procédé de modification de gain, le procédé comprenant :
la modification d'une valeur de gain servant à amplifier une pluralité de signaux, et dans lequel
le changement du moment auquel la valeur de gain doit basculer lors de la modification de la valeur de gain servant à amplifier la pluralité de signaux de façon que la valeur de gain d'un signal de la pluralité de signaux affectant un niveau de signal d'un autre signal de la pluralité de signaux bascule à un moment différent du moment auquel la valeur de gain dudit autre signal de la pluralité de signaux bascule ;
le degré de retard pour le basculement de gain étant variable en fonction de la durée pendant laquelle un changement de charge se produit lorsque la valeur de gain bascule.
